# EUROPEAN PATENT APPLICATION

(11) **EP 4 512 812 A1**
(43) Date of publication of application: **26.02.2025**
(21) Application number: 23815944.6
(22) Date of filing: 26.05.2023
(51) Int. Cl.: C07F 1/08

(54) **METHOD FOR PRODUCING ORGANIC COPPER COMPOUND**

(30) Priority: 31.05.2022 JP 2022088625
(71) Applicant: SynCrest Inc., Fujisawa-shi, Kanagawa 251-8555 (JP)
(72) Inventor: XU, Pengyu, Fujisawa-shi, Kanagawa 251-8555 (JP); YONEYAMA, Shin, Fujisawa-shi, Kanagawa 251-8555 (JP)
(74) Representative: Meissner Bolte Partnerschaft mbB
(86) International application number: PCT/JP2023/019608
(87) International publication number: WO 2023/234187

(57) **Abstract**

An object of the present invention is to provide a novel method for producing an organic copper compound useful in the synthesis of special amino acids. Provided is a production method for an organic copper compound.

## Description

### Technical Field

The present invention relates to a method for producing an organic copper compound.

### Background Art

NPL 1 and 2 disclose the use of an organic zinc iodine compound and CuCN for starting materials in a method for synthesizing an α-type special amino acid having an unsaturated bond. The obtained organic copper iodine compounds in NPL 1 and 2 are unstable, and their yields are low.

### Citation List

### Non-patent Literature

NPL 1: Synlett, (7), 499-500, 1993
NPL 2: J. Chem. Soc. Chem. Commun., (4), 319-320, 1992

### Summary of Invention

### Technical Problem

An object of the present invention is to provide a novel method for producing an organic copper compound useful for the synthesis of special amino acids.

### Solution to Problem

The present inventors conducted extensive research to achieve the object. First, they used a combination of a Grignard reagent and a lithium halide (e.g., lithium chloride) as a magnesium agent and reacted it with bromoserine, which is a raw material compound, and then used a copper agent, thereby directly synthesizing an organocopper amino acid, which is useful in the synthesis of special amino acids, simply and inexpensively.

The present inventors conducted further research based on this finding and completed the present invention.

Specifically, the present invention includes the following production method for an organic copper compound.

### Item 1.

A method for producing an organic copper compound represented by the following formula (1): 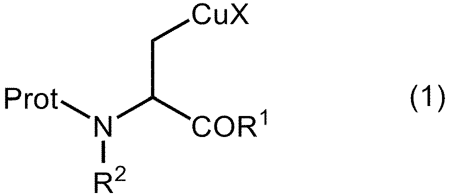 wherein
X is a halogen atom, a cyano group, or a trifluoromethanesulfonate group,
Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group,
R¹ is a hydroxyl group or a protecting group for a carboxylic acid, and
R² is a hydrogen atom or an alkyl group;
   the method comprising
   (1) reacting in an organic solvent a compound represented by the following formula (2): 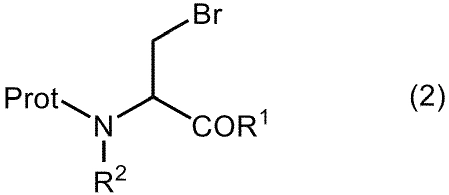 wherein
      Prot, R¹, and R² are as defined in formula (1),
      with a magnesium agent, and
   (2), after step (1), adding a copper agent to the reaction liquid to allow a reaction to proceed.

### Item 2.

The method according to Item 1, wherein the magnesium agent is a combination of (a) a Grignard reagent and (b) at least one compound selected from the group consisting of lithium chloride, lithium bromide, lithium iodide, and lithium alkoxide.

### Item 3.

The method according to Item 1 or 2,
wherein
when X in formula (1) is at least one halogen atom selected from the group consisting of a chlorine atom, a bromine atom, and an iodine atom, the copper agent is a combination of (c1) at least one compound selected from the group consisting of copper(I) chloride, copper(I) bromide, and copper(I) iodide with (d1) at least one compound selected from the group consisting of lithium chloride, lithium bromide, and lithium iodide, and
when X in formula (1) is a cyano group, the copper agent is a combination of (c2) copper(I) cyanide and (d2) lithium chloride.

### Item 4.

The method according to any one of Items 1 to 3, wherein the organic solvent is at least one organic solvent selected from the group consisting of an aprotic polar solvent, a halogen solvent, an ether solvent, an ester solvent, a hydrocarbon solvent, and an aromatic solvent.

The organic copper compound of the present invention is excellent in stability and useful in the synthesis of special amino acids, particularly in derivatization into aryl-type special amino acids.

### Advantageous Effects of Invention

The present invention provides a novel organic copper compound useful for the synthesis of special amino acids.

### Description of Embodiments

The present invention is described in detail below.

In the present specification, the terms "comprise" and "contain" include the concepts of comprising, containing, consisting essentially of, and consisting of.

In the present specification, a numerical range indicated by "A to B" means "A or more and B or less."

### [1] Method for Producing Organic Copper Compound

The method for producing an organic copper compound according to the present invention (which is also referred to as "the method for producing an organic copper compound of the present invention" below) is the following: the organic copper compound is represented by the following formula (1): 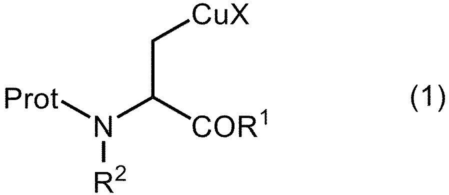 wherein
X is a halogen atom, a cyano group, or a trifluoromethanesulfonate group,
Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group,
R¹ is a hydroxyl group or a protecting group for a carboxylic acid, and
R² is a hydrogen atom or an alkyl group; and
   the method comprises
   (1) reacting in an organic solvent a compound represented by the following formula (2): 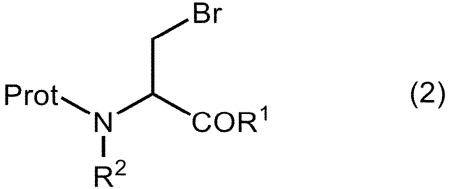 wherein
      Prot, R¹, and R² are as defined in formula (1),
      with a magnesium agent, and
   (2), after step (1), adding a copper agent to the reaction liquid to allow a reaction to proceed.

In the method for producing an organic copper compound of the present invention, the magnesium agent is preferably a combination of (a) a Grignard reagent and (b) at least one compound selected from the group consisting of lithium chloride, lithium bromide, lithium iodide, and lithium tert-butoxide.

In the method for producing an organic copper compound of the present invention, when X in formula (1) is at least one halogen atom selected from the group consisting of a chlorine atom, a bromine atom, and an iodine atom, the copper agent is preferably a combination of (c1) at least one compound selected from the group consisting of copper(I) chloride, copper(I) bromide, and copper(I) iodide, and (d1) at least one compound selected from the group consisting of lithium chloride, lithium bromide, and lithium iodide.

In the method for producing an organic copper compound of the present invention, when X in formula (1) is a cyano group, the copper agent is preferably a combination of (c2) copper(I) cyanide and (d2) lithium chloride.

In the method for producing an organic copper compound of the present invention, the organic solvent is preferably at least one organic solvent selected from the group consisting of an aprotic polar solvent, a halogen solvent, an ether solvent, an ester solvent, a hydrocarbon solvent, and an aromatic solvent.

The method for producing an organic copper compound of the present invention enables the direct synthesis of an organocopper amino acid from bromoserine (raw material compound), thereby providing a pure organocopper amino acid compound and broadening the application of the organocopper amino acid compound. The method for producing an organic copper compound of the present invention uses a combination of a Grignard reagent, such as iPrMgX¹ (described below), and a lithium halide, such as lithium chloride, as a magnesium agent, and reacts this magnesium agent with bromoserine (raw material compound). This enables the direct synthesis of an organocopper amino acid simply and inexpensively without allowing the Grignard reagent to react with the COR¹ of bromoserine.

### [1-1] Compound Represented by Formula (2)

The method for producing an organic copper compound of the present invention comprises reacting a compound represented by the following formula (2) (substrate): 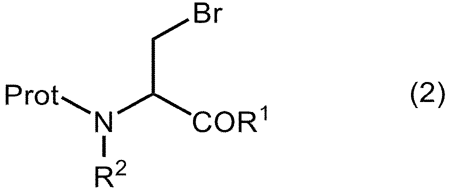 with a magnesium agent in an organic solvent.

In formula (2), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (2), R¹ is a hydroxyl group or a protecting group for a carboxylic acid.

In formula (2), R¹ is preferably a protecting group for a carboxylic acid. Known protecting groups for carboxylic acids may be used. Examples include the protecting groups described in chapter 5 of "Protective Groups in Organic Synthesis," 1981, John Wiley & Sons, Inc., by Theodora W. Greene.

In formula (2), R¹ is more preferably a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy; a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy; a C₃₋₈ cyclic alkoxy group, such as cyclopropyloxy, cyclobutyloxy, cyclopentyloxy, cyclohexyloxy, cycloheptyloxy, or cyclooctyloxy; an optionally substituted phenoxy group, such as phenoxy, 2,6-dimethylphenoxy, 2,6-di-tert-butyl-4-methylphenoxy, or 2-(dimethylamino)-5-nitrophenoxy; an optionally substituted benzyl group, such as benzyloxy, diphenylmethyloxy, or triphenylmethyloxy; an optionally substituted phenacyloxy group, such as phenacyloxy, p-bromophenacyloxy, α-methylphenacyloxy, or 3,4,5-trimethoxyphenacyloxy; a trialkylsilyloxy group, such as trimethylsilyloxy or triethylsilyloxy; or the like.

In formula (2), R¹ is even more preferably a C₁₋₄ linear or branched alkoxy group, an optionally substituted phenoxy group, or an optionally substituted benzyloxy group.

In formula (2), R¹ is particularly preferably methoxy, tert-butoxy, or the like.

In formula (2), R² is a hydrogen atom or an alkyl group.

In formula (2), R² is preferably a hydrogen atom or a linear, branched, or cyclic alkyl group.

Specific examples include hydrogen atoms; C₁₋₄ linear or branched alkyl groups, such as methyl, ethyl, n-propyl, isopropyl, n-butyl, isobutyl, sec-butyl, tert-butyl, and 1-ethylpropyl; C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl; C₃₋₈ cyclic alkyl groups, such as cyclopropyl, cyclobutyl, cyclopentyl, cyclohexyl, cycloheptyl, and cyclooctyl; and the like.

In formula (2), R² is more preferably a hydrogen atom, a C₁₋₄ linear or branched alkyl group, or the like.

In formula (2), R² is even more preferably a hydrogen atom, methyl, or the like.

The compound represented by formula (2) encompasses a compound whose three-dimensional structure is L type (compound represented by formula (2a) (L-form)) or D type (compound represented by formula (2b) (D-form)), or a mixture of an L-type compound and a D-type compound.

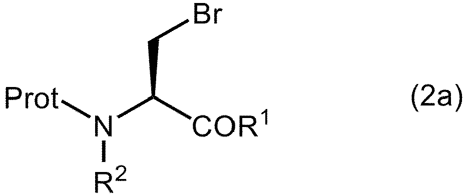

In formula (2a), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (2a), R¹ is a hydroxyl group or a protecting group for a carboxylic acid.

In formula (2a), R² is a hydrogen atom or an alkyl group.

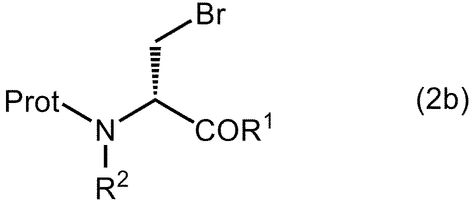

In formula (2b), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (2b), R¹ is a hydroxyl group or a protecting group for a carboxylic acid.

In formula (2b), R² is a hydrogen atom or an alkyl group.

The method for producing an organic copper compound of the present invention uses an organic bromine compound as a starting material to allow a reaction to proceed stably in an organic solvent, thereby making it possible to obtain the target compound in a high yield in the subsequent step.

### [1-2] Organic Solvent

The method for producing an organic copper compound of the present invention comprises (1) reacting the compound represented by formula (2) (substrate) and a magnesium agent in an organic solvent.

The organic solvent is preferably at least one organic solvent selected from the group consisting of an aprotic polar solvent, a halogen solvent, an ether solvent, an ester solvent, a hydrocarbon solvent, and an aromatic solvent.

The aprotic polar solvent is preferably acetone, acetonitrile, N,N-dimethylformamide (DMF), dimethyl sulfoxide (DMSO), or the like.

The halogen solvent is preferably dichloromethane (CH₂Cl₂), trichloromethane (CHCl₃), or the like.

The ether solvent is preferably tetrahydrofuran (THF), dioxane, diethyl ether (Et₂O), isopropyl ether (IPE), or the like.

The ester solvent is preferably ethyl acetate (AcOEt) or the like.

The hydrocarbon solvent is preferably n-hexane or the like.

The aromatic solvent is preferably toluene or the like.

The organic solvent is more preferably an aprotic polar solvent, such as acetone, acetonitrile, DMF, or DMSO; an ether solvent (polar solvent), such as THF, dioxane, or diethyl ether; or a halogen solvent, such as dichloromethane or trichloromethane.

The organic solvent is particularly preferably a highly polar solvent, such as DMSO, DMF, THF, a halogen solvent (CH₂Cl₂ or CHCl₃), or the like.

The amount of the organic solvent used is adjusted so that the concentration (M (mol/L)) of the compound represented by formula (2) (substrate) is preferably 0.01 M to 5 M, and more preferably 0.1 M to 2 M.

The method for producing an organic copper compound of the present invention uses the organic solvent described above to directly synthesize an organocopper amino acid from bromoserine (raw material compound), thereby providing a pure organocopper amino acid compound and broadening the application of the organocopper amino acid compound.

### [1-3] Magnesium Agent (Grignard Reagent + Lithium Halide)

The method for producing an organic copper compound of the present invention comprises (1) reacting the compound represented by formula (2) (substrate) with a magnesium agent in an organic solvent.

In the method for producing an organic copper compound of the present invention, the magnesium agent is preferably a combination of (a) a Grignard reagent and (b) at least one compound (lithium halide) selected from the group consisting of lithium chloride, lithium bromide, lithium iodide, and lithium alkoxide (preferably lithium tert-butoxide).

The lithium alkoxide is preferably lithium tert-butoxide.

The (a) Grignard reagent is an organic magnesium halide, which is an organometallic reagent represented by the formula R^{a}-MgX^{a}.

In the formula R^{a}-MgX^{a}, R^{a} is an organic group, preferably an isopropyl group (iPr), an isobutyl group (iBu), a tert-butyl group (tBu), or the like.

In the formula R^{a}-MgX^{a}, X^{a} is a halogen atom, a cyano group, a trifluoromethanesulfonate group (CF₃SO₃⁻, TfO⁻), or the like. The halogen atom is preferably a chlorine atom (Cl), a bromine atom (Br), an iodine atom (I), or the like.

In the method for producing an organic copper compound of the present invention, R^{a}-MgX^{a} (Grignard reagent) to be contained in the magnesium agent for use is preferably iPrMgCl, iPrMgBr, iBuMgBr, or the like, and particularly preferably iBuMgBr.

In the method for producing an organic copper compound of the present invention, the magnesium agent is preferably a combination of (a) a Grignard reagent and (b) a lithium halide, and particularly preferably a combination of (a) a Grignard reagent and (b) lithium tert-butoxide (LiOtBu).

In the method for producing an organic copper compound of the present invention, the amount of the magnesium agent used is adjusted so that the concentration (M (mol/L)) of the magnesium agent in the organic solvent is preferably 0.01 M to 5 M, and more preferably 0.1 M to 2 M.

In the method for producing an organic copper compound of the present invention, the amount of the magnesium agent used is preferably 20 mol% to 10,000 mol%, more preferably 80 mol% to 1,000 mol%, and even more preferably 90 mol% to 500 mol%, in molar ratio as a concentration relative to the compound represented by formula (2) (substrate) (when the concentration of the substrate is taken as 100 mol%).

In the method for producing an organic copper compound of the present invention, the amount of the Grignard reagent (e.g., iBuMgBr) used in the magnesium agent is preferably 0.2 to 200 equivalents, more preferably 0.8 to 20 equivalents, and even more preferably 0.9 to 10 equivalents in molar ratio in terms of equivalents relative to the compound represented by formula (2) (substrate) (when the amount of the substrate is taken as 1 equivalent).

In the method for producing an organic copper compound of the present invention, the amount of lithium halide (e.g., LiOtBu) used in the magnesium agent is preferably 0.2 to 200 equivalents, more preferably 0.8 to 20 equivalents, and even more preferably 0.9 to 10 equivalents in molar ratio in terms of equivalents relative to the compound represented by formula (2) (substrate) (when the amount of the substrate is taken as 1 equivalent).

In the method for producing an organic copper compound of the present invention, the amount of the magnesium agent used is, in a combination of (a) a Grignard reagent and (b) a lithium halide, particularly 1 equivalent of (a) the Grignard reagent (preferably, iBuMgBr) and 1 equivalent of (b) the lithium halide (preferably, LiOtBu), relative to the compound represented by formula (2) (substrate) (when the amount of the substrate is taken as 1 equivalent) in molar ratio. This enables the production of the target organic copper compound represented by formula (1) at maximum yields.

The method for producing an organic copper compound of the present invention enables the direct synthesis of an organocopper amino acid from bromoserine (raw material compound), thereby providing a pure organocopper amino acid compound and broadening the application of the organocopper amino acid compound. The method for producing an organic copper compound of the present invention uses a combination of a Grignard reagent, such as iPrMgX¹, and lithium chloride or the like, as a magnesium agent, and reacts this magnesium agent with bromoserine (raw material compound). This enables the direct synthesis of an organocopper amino acid simply and inexpensively without allowing the Grignard reagent to react with the COR¹ of bromoserine.

The method for producing an organic copper compound of the present invention uses the magnesium agent to allow a reaction to efficiently proceed in the subsequent step (a coupling reaction using organic copper). The organic copper compound directly synthesized using a Grignard reagent has higher activity than organozinc-copper bimetallic compounds, thereby enabling the generation of target compounds with high yields.

### [1-4] Copper Agent (Copper Halide, Copper Cyanide + Lithium Halide)

The method for producing an organic copper compound of the present invention includes, after step (1), step (2) of adding a copper agent to the reaction liquid to allow a reaction to proceed.

The copper (Cu) in the organic copper compound represented by formula (1), which is the product produced by the method for producing an organic copper compound of the present invention, is derived from the copper agent used as a substrate (raw material compound).

In the method for producing an organic copper compound of the present invention, when X in formula (1) is at least one halogen atom selected from the group consisting of a chlorine atom (Cl), a bromine atom (Br), and an iodine atom (I), the copper agent is preferably a combination of (c1) at least one compound selected from the group consisting of copper(I) chloride, copper(I) bromide, and copper(I) iodide, with (d1) at least one compound selected from the group consisting of lithium chloride, lithium bromide, and lithium iodide.

In the method for producing an organic copper compound of the present invention, when X in formula (1) is a cyano group, the copper agent is preferably a combination of (c2) copper(I) cyanide and (d2) lithium chloride.

In the method for producing an organic copper compound of the present invention, the copper agent is more preferably a combination of copper(I) chloride and lithium chloride when X in formula (2) is at least one halogen atom selected from the group consisting of a chlorine atom, a bromine atom, and an iodine atom .

In the method for producing an organic copper compound of the present invention, the copper agent is more preferably a combination of copper(I) cyanide and lithium chloride when X in formula (2) is a cyano group.

In the method for producing an organic copper compound of the present invention, the amount of the copper agent used is adjusted so that the concentration (M (mol/L)) of the copper agent in the organic solvent is preferably 0.01 M to 5 M, and more preferably 0.1 M to 2 M.

In the method for producing an organic copper compound of the present invention, the amount of the copper agent used is preferably 20 mol% to 10,000 mol%, more preferably 80 mol% to 1,000 mol%, and even more preferably 90 mol% to 500 mol%, in molar ratio as a concentration relative to the compound represented by formula (2) (substrate) (when the concentration of the substrate is taken as 100 mol%).

In the method for producing an organic copper compound of the present invention, the amount of lithium hydride (e.g., LiCl, LiBr, and LiI) used in the copper agent is preferably 0.2 to 200 equivalents, more preferably 0.8 to 20 equivalents, and even more preferably 0.9 to 10 equivalents, in molar ratio relative to the compound represented by formula (2) (substrate) (when the amount of the substrate is taken as 1 equivalent).

In the method for producing an organic copper compound of the present invention,
the amount of the copper agent used is,
relative to the compound represented by formula (2) (substrate) (when the equivalent of the substrate is taken as 1 equivalent),
2 equivalent of lithium chloride in molar ratio as an equivalent,
particularly relative to 1 equivalent of at least one compound selected from the group consisting of copper(I) chloride, copper(I) bromide, copper(I) iodide, and copper(I) cyanide.

The target compound, i.e., the organic copper compound represented by formula (1), can be obtained with a maximum yield.

The method for producing an organic copper compound of the present invention can produce a novel organic copper compound by using a copper agent, and this organic copper compound is excellent in stability.

The method for producing an organic copper compound of the present invention enables the direct synthesis of an organocopper amino acid from bromoserine (raw material compound), by using a copper agent, thereby providing a pure organocopper amino acid compound and broadening the application of the organocopper amino acid compound.

### [1-5] Method for Producing Organic Copper Compound

The method for producing an organic copper compound of the present invention enables the direct synthesis of an organocopper amino acid from bromoserine (raw material compound), thereby providing a pure organocopper amino acid compound and broadening the application of the organocopper amino acid compound. The method for producing an organic copper compound of the present invention uses a combination of a Grignard reagent, such as iPrMgX¹ and a lithium halide, such as lithium chloride, as a magnesium agent, and reacts this magnesium agent with bromoserine (raw material compound). This enables the direct synthesis of an organocopper amino acid (aryl-type special amino acid) simply and inexpensively without allowing the Grignard reagent to react with the COR¹ of bromoserine.

### Step (1)

The method for producing an organic copper compound of the present invention comprises (1) reacting a compound represented by the following formula (2): 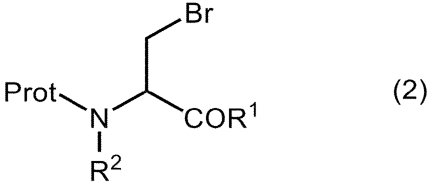 with a magnesium agent in an organic solvent.

In formula (2), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (2), R¹ is a hydroxyl group or a protecting group for a carboxylic acid.

In formula (2), R² is a hydrogen atom or an alkyl group.

The reaction temperature in step (1) is preferably -100°C to room temperature, more preferably -78°C to 0°C, and particularly preferably -0°C to -10°C. The reaction temperature in step (1) is preferably about -40°C.

The reaction time in step (1) is preferably 5 minutes to 24 hours, more preferably 10 minutes to 6 hours, and even more preferably 15 minutes to 120 minutes.

### Step (2)

The method for producing an organic copper compound of the present invention comprises (2), after step (1), adding a copper agent to the reaction liquid to allow a reaction to proceed, thereby providing a copper compound represented by the following formula (1):

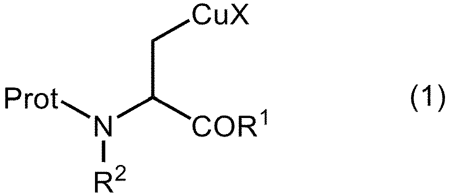

In formula (1), X is a halogen atom, a cyano group, or a trifluoromethanesulfonate group.

In formula (1), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1), R¹ is a hydroxyl group or a protecting group for a carboxylic acid.

In formula (1), R² is a hydrogen atom or an alkyl group.

The reaction temperature in step (2) is preferably -100°C to room temperature, more preferably -78°C to 0°C, and even more preferably -40°C to -10°C. The reaction temperature in step (2) is preferably about -30°C.

The reaction time in step (1) is preferably 5 minutes to 48 hours, more preferably 10 minutes to 12 hours, and even more preferably 1 hour to 6 hours.

In the method for producing an organic copper compound of the present invention, the reaction in step (1) is first performed at a reaction temperature of -40°C for 30 minutes, and then the reaction in step (2) is performed by adding a reagent, raising the temperature to -30°C, and performing the reaction for 3 hours, thereby obtaining the target compound with the maximum yield in total.

The production method of the present invention can produce the target organic copper compound while keeping the three-dimensional structure of the substrate.

When the compound represented by formula (2a), whose three-dimensional structure is L type, is used as the substrate, an organic copper compound represented by formula (1a) (L-form) can be produced.

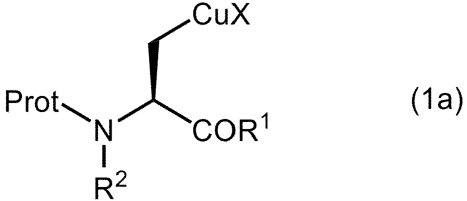

In formula (1a), X is a halogen atom, a cyano group, or a trifluoromethanesulfonate group.

In formula (1a), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1a), R¹ is a hydroxyl group or a protecting group for a carboxylic acid.

In formula (1a), R² is a hydrogen atom or an alkyl group.

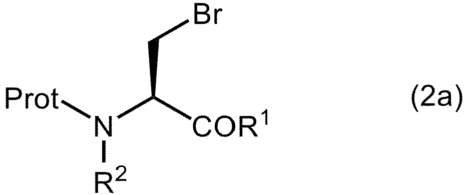

In formula (2a), X, Prot, R¹, and R² are as defined in formula (1a).

When the compound represented by formula (2b), whose three-dimensional structure is D type, is used as the substrate, an organic copper compound represented by formula (1b) (D-form) can be produced.

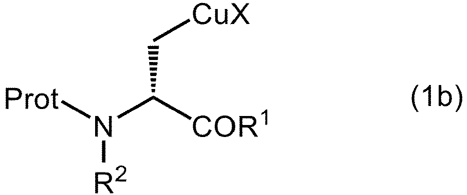

In formula (1b), X is a halogen atom, a cyano group, or a trifluoromethanesulfonate group.

In formula (1b), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1b), R¹ is a hydroxyl group or a protecting group for a carboxylic acid.

In formula (1b), R² is a hydrogen atom or an alkyl group.

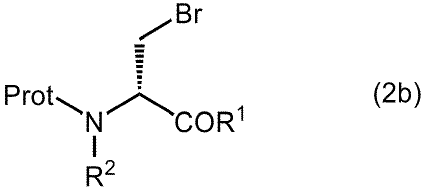

In formula (2b), X, Prot, R¹, and R² are as defined in formula (1b) above.

Similarly, when a mixture of the L-form and D-form of the compound represented by formula (2) is used as a substrate, a mixture of the L-form and D-form of the organic copper compound represented by formula (1) is produced with the proportion of the L-form and D-form maintained.

### [2] Organic Copper Compound

The organic copper compound of the present invention is according to the method for producing an organic copper compound of the present invention. First, a combination of a Grignard reagent and lithium halide such as lithium chloride, used as a magnesium agent, is reacted with bromoserine (raw material compound), and then a copper agent is used to directly synthesize simply and inexpensively an organocopper amino acid represented by formula (1), which is useful in the synthesis of special amino acids.

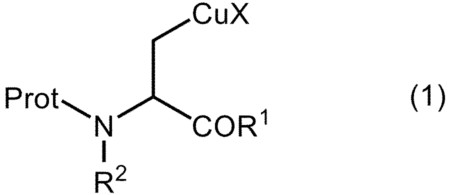

In formula (1), X is a halogen atom, a cyano group, or a trifluoromethanesulfonate group.

In formula (1), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1), R¹ is a hydroxyl group or a protecting group for a carboxylic acid.

In formula (1), R¹ is preferably a protecting group for a carboxylic acid. Generally known protecting groups for carboxylic acids may be used. Examples include the protecting groups described in chapter 5 of "Protective Groups in Organic Synthesis," 1981, John Wiley & Sons, Inc., by Theodora W. Greene.

In formula (1), R¹ is more preferably
a C₁₋₄ linear or branched alkoxy group, such as methoxy, ethoxy, n-propoxy, isopropyloxy, n-butoxy, isobutyloxy, sec-butoxy, tert-butoxy, or 1-ethylpropyloxy; a C₁₋₁₈ linear or branched alkoxy group, such as n-pentyloxy, isopentyloxy, neopentyloxy, n-hexyloxy, isohexyloxy, 3-methylpentyloxy, n-heptyloxy, n-octyloxy, n-nonyloxy, n-decyloxy, n-undecyloxy, n-dodecyloxy, 5-propylnonyloxy, n-tridecyloxy, n-tetradecyloxy, n-pentadecyloxy, hexadecyloxy, heptadecyloxy, or octadecyloxy; a C₃₋₈ cyclic alkoxy group, such as cyclopropyloxy, cyclobutyloxy, cyclopentyloxy, cyclohexyloxy, cycloheptyloxy, or cyclooctyloxy; an optionally substituted phenoxy group, such as phenoxy, 2,6-dimethylphenoxy, 2,6-di-tert-butyl-4-methylphenoxy, or 2-(dimethylamino)-5-nitrophenoxy; an optionally substituted benzyl group, such as benzyloxy, diphenylmethyloxy, or triphenylmethyloxy; an optionally substituted phenacyloxy group, such as phenacyloxy, p-bromophenacyloxy, α-methylphenacyloxy, or 3,4,5-trimethoxyphenacyloxy; a trialkylsilyloxy group, such as trimethylsilyloxy or triethylsilyloxy; or the like.

In formula (1), R¹ is more preferably a C₁₋₄ linear or branched alkoxy group, an optionally substituted phenoxy group, or an optionally substituted benzyloxy group.

In formula (1), R¹ is particularly preferably methoxy, tert-butoxy, or the like.

In formula (1), R² is a hydrogen atom or an alkyl group.

In formula (1), R² is preferably a hydrogen atom or a linear, branched, or cyclic alkyl group.

Specific examples include a hydrogen atom; C₁₋₄ linear or branched alkyl groups, such as methyl, ethyl, n-propyl, isopropyl, n-butyl, isobutyl, sec-butyl, tert-butyl, and 1-ethylpropyl; C₁₋₁₈ linear or branched alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl; C₃₋₈ cyclic alkyl groups, such as cyclopropyl, cyclobutyl, cyclopentyl, cyclohexyl, cycloheptyl, and cyclooctyl; and the like.

In formula (1), R² is more preferably a hydrogen atom, a C₁₋₄ linear or branched alkyl group, or the like.

In formula (1), R² is even more preferably a hydrogen atom, methyl, or the like.

The compound represented by formula (1) includes a compound whose three-dimensional structure is L type (organic copper compound represented by formula (1a)) or D type (organic copper compound represented by formula (1b)), or a mixture of an L-type compound and a D-type compound. 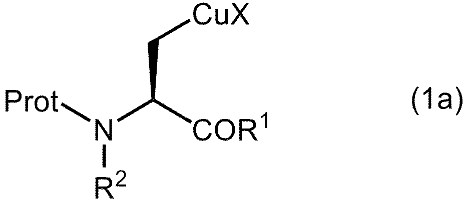 In formula (1a), X is a halogen atom, a cyano group, or a trifluoromethanesulfonate group.

In formula (1a), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1a), R¹ is a hydroxyl group or a protecting group for a carboxylic acid.

In formula (1a), R² is a hydrogen atom or an alkyl group.

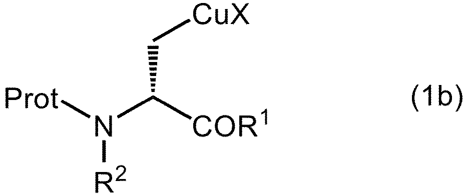

In formula (1b), X is a halogen atom, a cyano group, or a trifluoromethanesulfonate group.

In formula (1b), Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group.

In formula (1b), R¹ is a hydroxyl group or a protecting group for a carboxylic acid.

In formula (1b), R² is a hydrogen atom or an alkyl group.

The organic copper compound of the present invention is excellent in stability and useful for the synthesis of special amino acids, particularly for derivatization into aryl-type special amino acids.

The embodiments of the present invention are described above; however, the present invention is not limited to these examples. Needless to say, the present invention can be implemented in various forms within the scope not departing from the concept of the present invention.

### Examples

Embodiments of the present invention are described in more detail below based on Examples.

The present invention is not limited thereto.

### Production Method in Examples

MeO: methoxy group
t-BuO: tert-butoxy group
iBu: isobutyl group
tBu: tert-butyl group

### Example 1

### Production of Compound Represented by Formula (1) wherein Prot=Fmoc, X=Cl, R¹=MeO, and R²=H

### Step (1)

A raw material, Fmoc bromoserine methyl ester, was added to 5 mL of a THF solvent and cooled to -40°C. Then, iBuMgBr (Grignard reagent) and lithium tert-butoxide (LiOtBu) were added thereto, followed by stirring the reaction liquid at -40°C for 30 minutes.

### Step (2)

The reaction liquid obtained in step (1) was then poured into a THF solvent (5 mL) containing CuCl and LiCl that had been cooled to -30°C beforehand, and the mixture was stirred for 1 hour to 10 hours.

The resulting organic copper compound was freeze-dried and then stored for a long period of time or used directly in the subsequent step.

As a result of the above production method, an organic copper compound (a compound of formula (1a) (L-form) wherein Prot=Fmoc, X=Cl, R¹=MeO, and R²=H) was obtained.

After the obtained organic copper compound was freeze-dried, NMR was measured in DMSO-d6 and is shown below.
1H NMR (300 MHz, d6-DMSO): 8.02 (d, J=8.4 Hz, 1 H), 7.90 (d, J=7.4 Hz, 2H), 7.73 (d, J=7.4 Hz, 2 H), 7.44 (t, J=6.9 Hz, 2 H), 7.34 (t, J=6.9 Hz, 2 H), 6.30 (d, J=6.6 Hz, 1 H), 3.85-3.79(m, 1 H), 3.53 (s, 3 H), 0.42-0.33 (m, 2H)

### Example 2

### Production of Compound Represented by Formula (1) wherein_ Prot=Boc, X=Cl, R¹=MeO, and R²=H

### Step (1)

A raw material, Fmoc bromoserine methyl ester, was added to 5 mL of a THF solvent and cooled to -40°C. Then, iBuMgBr (Grignard reagent) and lithium tert-butoxide (LiOtBu) were added thereto, followed by stirring the reaction liquid at -40°C for 30 minutes.

### Step (2)

The reaction liquid obtained in step (1) was then poured into a THF solvent (5 mL) containing CuCl and LiCl that had been cooled to -30°C beforehand, and the mixture was stirred for 1 hour to 10 hours.

The resulting organic copper compound was freeze-dried and then stored for a long period of time or used directly in the subsequent step.

As a result of the above production method, an organic copper compound (a compound of formula (1a) (L-form) wherein Prot=Boc, X=Cl, R¹=MeO, and R²=H) was obtained.

After the obtained organic copper compound was freeze-dried, NMR was measured in DMSO-d6 and is shown below.
1H NMR (300 MHz, d6-DMSO): 6.11 (d, J=6.6 Hz, 1 H), 3.85-3.79 (m, 1 H), 3.53 (s, 3 H), 1.39 (s, 9 H), 0.42-0.35 (m, 2 H)

### Industrial Applicability

In the method for producing an organic copper compound of the present invention, first, a combination of a Grignard reagent and lithium chloride or the like is used as a magnesium agent. The magnesium agent is reacted with bromoserine (raw material compound), and then, a copper agent is used, thereby directly synthesizing simply and inexpensively an organocopper amino acid, which is useful in the synthesis of special amino acids.

The organic copper compound of the present invention is excellent in stability and useful in the synthesis of special amino acids, particularly in derivatization into aryl-type special amino acids.

## Claims

1. A method for producing an organic copper compound represented by the following formula (1):
[0009] 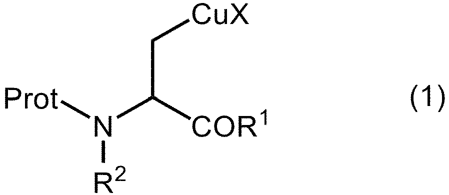 wherein
X is a halogen atom, a cyano group, or a trifluoromethanesulfonate group,
Prot is a protecting group selected from the group consisting of a 9-fluorenylmethyloxycarbonyl protecting group, a tert-butoxycarbonyl protecting group, an allyloxycarbonyl protecting group, and a benzyloxycarbonyl protecting group,
R¹ is a hydroxyl group or a protecting group for a carboxylic acid, and
R² is a hydrogen atom or an alkyl group;
the method comprising
(1) reacting in an organic solvent a compound represented by the following formula (2): 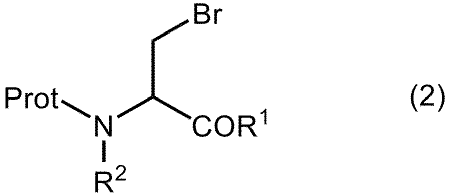 wherein
Prot, R¹, and R² are as defined in formula (1),
with a magnesium agent, and
(2), after step (1), adding a copper agent to the reaction liquid to allow a reaction to proceed.

2. The method according to claim 1, wherein the magnesium agent is a combination of (a) a Grignard reagent and (b) at least one compound selected from the group consisting of lithium chloride, lithium bromide, lithium iodide, and lithium alkoxide.

3. The method according to claim 1 or 2,
wherein
when X in formula (1) is at least one halogen atom selected from the group consisting of a chlorine atom, a bromine atom, and an iodine atom, the copper agent is a combination of (c1) at least one compound selected from the group consisting of copper(I) chloride, copper(I) bromide, and copper(I) iodide with (d1) at least one compound selected from the group consisting of lithium chloride, lithium bromide, and lithium iodide, and
when X in formula (1) is a cyano group, the copper agent is a combination of (c2) copper(I) cyanide and (d2) lithium chloride.

4. The method according to any one of claims 1 to 3, wherein the organic solvent is at least one organic solvent selected from the group consisting of an aprotic polar solvent, a halogen solvent, an ether solvent, an ester solvent, a hydrocarbon solvent, and an aromatic solvent.
